# FASCICULE DE BREVET EUROPEEN

(11) **EP 0 927 108 B1**
(45) Date de publication et mention de la délivrance du brevet: **24.04.2002**
(21) Numéro de dépôt: 97919129.3
(22) Date de dépôt: 19.09.1997
(51) Int. Cl.: B60K 3/02, F01B 17/02

(54) **INSTALLATION DE COMPRESSEURS D'ALIMENTATION EN AIR COMPRIME HAUTE PRESSION POUR MOTEUR DEPOLLUE OU DEPOLLUANT**
EINRICHTUNG EINES HOCHDRUCKLUFTVERDICHTERS FÜR BRENNKRAFTMASCHINE
SUPERCHARGER INSTALLATION FOR SUPPLYING HIGH PRESSURE COMPRESSED AIR FOR CLEANSED OR POLLUTION ABATING ENGINE

(30) Priorité: 19.09.1996 FR 9611632
(43) Date de publication de la demande: 07.07.1999
(73) Titulaire: Negre, Guy, 83170 Brignoles (FR)
(72) Inventeur: NEGRE, Guy, F-83170 Brignoles (FR); NEGRE, Cyril, F-83170 Brignoles (FR)
(74) Mandataire: Kohn, Philippe
(86) Numéro de dépôt international: FR9701657
(87) Numéro de publication internationale: WO9812062

(56) Documents cités:
- EP-A- 0 645 272
- WO-A-96/27737
- BE-A- 884 170
- FR-A- 2 253 916
- GB-A- 1 357 696
- US-A- 4 123 910
- US-A- 4 798 053

## Description

L'invention concerne les moteurs de véhicules terrestres et plus particulièrement les moteurs dépollués à chambre de combustion indépendante et les moteurs dépolluant sur autobus urbain et autres véhicules de service.

Le demandeur a décrit dans ses demandes de brevet WO 96/27737 et WO 97/48884 un procédé de dépollution de moteur à chambre de combustion externe indépendante fonctionnant suivant un principe bi-mode avec un carburant conventionnel de type essence ou gasoil sur route et fonctionnant, en zone urbaine et suburbaine, avec une addition d'air comprimé (ou tout autre gaz non polluant) à l'exclusion de tout autre carburant, ainsi que l'installation de ce type en fonctionnement mono-mode avec addition d'air comprimé sur des autobus urbains et autres véhicules de service. Dans ce type de moteur, le mélange air - carburant est aspiré et comprimé dans une chambre d'aspiration et de compression indépendante puis transféré toujours en pression dans une chambre de combustion indépendante et à volume constant pour y être enflammé afin d'augmenter la température et la pression dudit mélange qui après l'ouverture d'un transfert reliant ladite chambre de combustion ou d'expansion à une chambre de détente et d'échappement sera détendu dans cette dernière pour y produire un travail puis évacué à l'atmosphère à travers un conduit d'échappement, et dans lequel lors du fonctionnement à faible puissance, l'injecteur de carburant n'est plus commandé et que, dans ce cas, l'on introduit dans la chambre de combustion sensiblement après l'admission dans cette dernière de l'air comprimé sans carburant provenant de la chambre d'aspiration et de compression une petite quantité d'air comprimé additionnel provenant d'un réservoir externe où l'air est stocké sous haute pression, par exemple 200 bars, et à la température ambiante et que cette petite quantité d'air comprimé à température ambiante va s'échauffer au contact de la masse d'air à haute température contenue dans la chambre de combustion ou d'expansion, va se dilater et augmenter la pression régnant dans la chambre pour permettre de délivrer lors de la détente un travail moteur réalisant ainsi un fonctionnement bi-mode ou bi-énergie. Ce type de moteur pouvant également être modifié pour une utilisation préférentielle en ville par exemple sur tous véhicules, et plus particulièrement sur des autobus urbains ou autres véhicules de service, taxis, bennes à ordures, etc... de telle sorte que tous les éléments de fonctionnement du moteur avec le carburant traditionnel soient supprimés et que le moteur fonctionne seulement en mono-mode avec l'injection d'air comprimé additionnel dans la chambre de combustion qui devient ainsi une chambre d'expansion. En outre, l'air aspiré par le moteur est filtré et purifié à travers un ou plusieurs filtres à charbon ou autre procédé mécanique chimique, tamis moléculaire, ou autres afin de réaliser un moteur dépolluant.

Ce type de moteur réclame dans son utilisation urbaine, notamment avec de l'air comprimé seul, une grande quantité d'air comprimé sous haute pression stocké dans des réservoirs installés sur le véhicule. Dans le cas d'une utilisation de ce type de moteur sur des autobus urbains ou autres véhicules de service, ces réserves doivent être encore plus importantes pour pouvoir faire fonctionner le véhicule avec une autonomie suffisante. Les stations de remplissage de ces réservoirs peuvent être installées soit dans tous les garages, soit en tête de ligne ou aux arrêts de bus, et réclament ainsi des installations importantes et une infrastructure lourde, complexe et coûteuse externe au véhicule, en particulier lorsqu'il s'agit d'obtenir des temps de remplissage courts.

Le document US-A-4.123.910 décrit et représente un système de propulsion d'un véhicule comportant un moteur à combustion interne primaire et un moteur à air comprimé secondaire qui fournit une énergie supplémentaire au véhicule. Ce système comporte notamment un compresseur d'air qui est entraîné par le moteur primaire et qui fournit de l'air comprimé au moteur secondaire par l'intermédiaire d'un réservoir d'air comprimé.

Dans ce système, le compresseur d'air consomme de l'énergie fournie directement par le moteur primaire, ce qui diminue le rendement du moteur primaire. La diminution du rendement du moteur primaire est défavorable à la diminution des émissions polluantes du véhicule. De plus, lorsque le moteur primaire ne fonctionne pas, l'autonomie du véhicule est très limitée puisque le compresseur d'air n'est plus alimenté en énergie. Le réservoir d'air comprimé n'est donc pas alimenté en air comprimé pendant un arrêt prolongé du véhicule.

Le document FR-A-2.253.916 décrit toutes les caractéristiques du préambule de la revendication 1 et représente un moteur du type à pistons et cylindres fonctionnant avec de l'air comprimé provenant d'un réservoir haute pression. Ce réservoir est alimenté en air comprimé par un compresseur d'air fonctionnant au moyen de l'énergie électrique fournie par des batteries, qui peuvent être reliées à un réseau d'alimentation électrique externe dans les garages.

Le but de l'invention est d'éviter dans les garages des réseaux complexes. Pour atteindre ce but l'invention propose un véhicule tel que défini dans la revendication 1.

D'autres caractéristiques de l'invention sont exposées dans les revendications dépendantes.

L'installation de compresseurs haute pression d'alimentation d'air suivant l'invention permet de supprimer les infrastructures lourdes et complexes, externes au véhicule.

La voiture, l'autobus ou le véhicule de service équipé de moteur tels que décrits ci-dessus, comporte un compresseur haute pression embarqué et entraîné par un moteur autonome par exemple par un moteur électrique alimenté par exemple par le réseau électrique (par exemple biphasé 220 volts ou triphasé 380 volts).

Les avantages de cette installation qui permet de supprimer toute infrastructure externe au véhicule, lourde, complexe, et coûteuse et qui nécessite seulement une prise de courant sur laquelle la voiture, l'autobus urbain ou le véhicule de service viendra se brancher durant sa période de repos (la nuit par exemple) pour permettre en faisant fonctionner ledit moteur et le compresseur embarqué, de remplir en air comprimé haute pression les réservoirs installés sur le véhicule.

Dans le cas ou le moteur d'entraînement du compresseur embarqué utilise une énergie également embarquée (batterie, énergie solaire, carburant, etc...), il sera également possible de re-remplir les réserves d'air comprimé du véhicule durant le fonctionnement de ce dernier.

De plus, afin de simplifier l'installation, il est possible de s'affranchir de la présence de filtres sur le compresseur embarqué pour ce faire, selon une caractéristique particulière de l'invention, l'air aspiré par le compresseur embarqué peut être prélevé entre le système de filtrage de l'air de l'admission du moteur du véhicule et le moteur lui-même par un système de dérivation évitant ainsi un système de filtrage particulier au compresseur haute pression.

Selon la caractéristique principale de l'invention, pour faciliter le parcage des véhicules et plus particulièrement des autobus dans les garages, le véhicule est équipé avec des prises femelles et/ou mâles à l'avant et/ou à l'arrière reliées entre-elles pour permettre le branchement du véhicule garé devant ou derrière ce dernier suivant le cas (l'autobus ou autre véhicule servant ainsi de rallonge électrique) afin d'éviter dans les garages des réseaux électriques complexes.

En outre, l'infrastructure extérieure étant particulièrement légère (une simple prise de courant), des remplissages partiels pourront être effectués lors des arrêts prolongés par exemple en tête de lignes pour les autobus.

Le compresseur embarqué sur la voiture, l'autobus, ou le véhicule de service pourra être embrayé sur la transmission pour fonctionner et remplir les réservoirs lors des ralentissements et des freinages permettant ainsi de récupérer l'énergie qui est dissipée durant ces opérations. Dans ce cas un système de débrayage entre le moteur électrique et le compresseur haute pression pourra être mis en place pour éviter de faire tourner le moteur électrique durant les ralentissements et les freinages.

D'autres buts, avantages et caractéristiques de l'invention apparaîtrons à la lecture de la description à titre non limitatif d'un mode de réalisation de l'invention faite en regard des dessins annexés où
- La figure 1 représente schématiquement, un mode de réalisation de l'installation suivant l'invention
- La figure 2 représente un mode d'alimentation en électricité dans un garage, suivant l'invention.

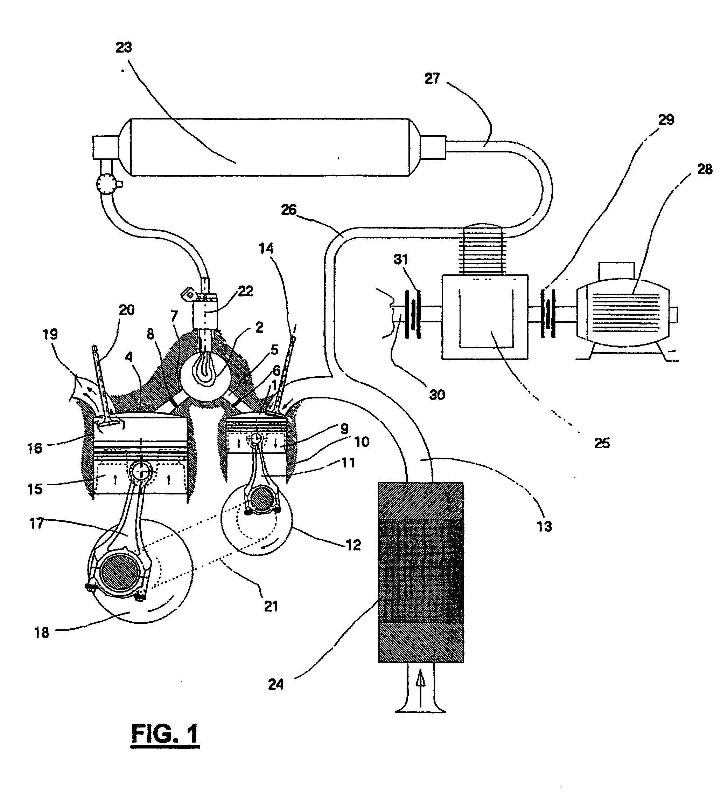

La figure 1 représente, schématiquement vu en coupe transversale, un mode de réalisation du moteur suivant l'invention où la chambre d'aspiration et de compression et la chambre de détente et d'échappement sont commandées chacune par des systèmes bielles manivelles et pistons coulissants dans des cylindres, et, où l'on peut voir la chambre d'aspiration et de compression 1, la chambre de combustion ou d'expansion 2 à volume constant dans laquelle est implanté un injecteur d'air comprimé additionnel 22 alimente en air comprimé stocké dans un réservoir très haute pression 23 et la chambre de détente et d'échappement 4. La chambre d'aspiration et de compression 1 est reliée à la chambre de combustion ou d'expansion 2 par un conduit 5 dont l'ouverture et la fenneture sont commandées par un volet étanche 6. La chambre de combustion ou d'expansion 2 est reliée à la chambre de detente et d'échappement 4 par un conduit ou transfert 7 dont l'ouverture et la fermeture sont commandées par un volet étanche 8 La chambre d'aspiration et de compression 1 est alimentée en air par un conduit d'admission 13 dont l'ouverture est commandée par une soupape 14 et, en amont duquel est implanté un filtre à Charbon dépolluant 24. La chambre d'aspiration et de compression 1 fonctionne comme un ensemble de compresseur à piston où un piston 9 coulissant dans un cylindre 10 est commandé par une bielle 11 et un vilebrequin 12. La chambre de détente et d'échappement 4 commande un ensemble classique de moteur à piston avec un piston 15 coulissant dans un cylindre 16, qui entraîne par l'intermédiaire d'une bielle 17 la rotation d'un vilebrequin 18. L'échappement de l'air détendu s'effectuant à travers un conduit d'échappement 19 dont l'ouverture est commandée par une soupape 20. La rotation du vilebrequin 12 de la chambre d'aspiration et de compression 1 est commandée à travers une liaison mécanique 21 par le vilebrequin moteur 18 de la chambre de détente et d'échappement 4. Le compresseur embarqué 25 a son admission d'air 26 en dérivation sur le conduit d'admission du moteur 13 entre le système de filtrage 24 du moteur et le moteur lui-même Lors de sa rotation il va remplir en air comprimé à travers son conduit d'échappement 27, les réserves d'air comprimé haute pression 23 installées sur le véhicule. Le compresseur 25 est entraîné par un moteur électrique 28 à travers un embrayage 29 qui est actionné pour le remplissage des réserves.

Le compresseur 25 est également relié à la transmission du véhicule 30, également à travers un embrayage 31 qui sera actionné (embrayé) lors des décélérations et des freinages, et servira de frein moteur permettant de ralentir le véhicule et de remplir les reserves d'air comprimé 23 en évitant de perdre l'énergie dissipée lors desdits ralentissements et freinages.

Dans l'exemple qui vient d'être décrit, il a été utilisé comme gaz non polluant comprimé, de l'air sous pression, cependant, il est possible d'utiliser tout autre gaz non polluant comprime ou liquéfié par exemple l'azote liquide

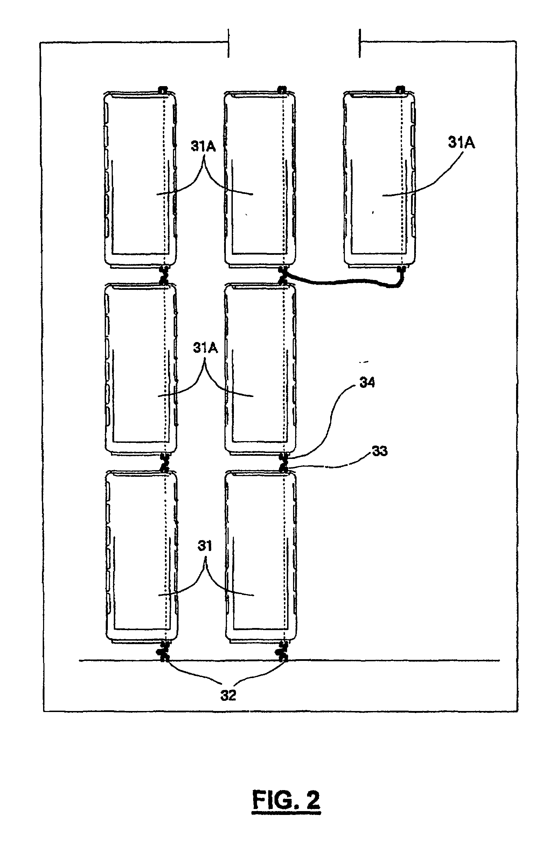

La figure 2 représente vue en élévation schématisée, des autobus urbains dans un garage (centre bus) en période de repos alors que le moteur électrique de chaque véhicule est en fonctionnement pour entrainer le compresseur embarqué afin de recharger les réserves d'air comprimé 23 ou le moteur électrique des autobus 31 est relié à des prises de courant du local 32, alors que les autres véhicules 31A sont reliés entre-deux par l'intermédiaire des prises de courant reliées entre-elles et implantées à l'avant 3 3 et à l'arrière 34 de chaque bus

Il va sans dire que les différentes dispositions des prises de courant sur les autobus ainsi que les schémas de branchements de l'un à l'autre peuvent varier sans pour autant changer le principe d'alimentation en cascade en électricité qui vient d'être décrit

Le type de compresseur embarque haute pression, le type de moteur électrique d'entraînement du compresseur, voire thermique dans certains cas particuliers, le type de filtrage ou le nombres de filtres, les différentes dispositions des éléments dans le véhicule, peuvent varier sans pour autant changer le principe de l'invention

## Revendications

1. Véhicule, notamment du type autobus urbain ou autre véhicule de service, comportant un moteur dépollué et/ou dépolluant dans lequel un mélange air carburant est aspiré et comprimé dans une chambre de combustion ou d'expansion indépendante (2) dans laquelle l'on introduit, sensiblement après l'admission dans cette dernière de l'air comprimé - sans carburant - provenant d'une chambre d'aspiration et de compression (1), une petite quantité de gaz non polluant comprimé additionnel provenant d'un réservoir externe (23) dans lequel ce gaz comprimé additionnel est stocké sous haute pression et sensiblement à la température ambiante, du type comportant une installation embarquée de compresseur d'alimentation en air comprimé haute pression permettant de remplir les réserves de gaz comprimé du véhicule, du type dans lequel l'installation de compresseur comporte un moteur d'entraînement de type électrique, le véhicule étant équipé de moyens de branchement à un réseau d'alimentation électrique externe au véhicule permettant d'alimenter le moteur en énergie électrique lors d'un arrêt prolongé du véhicule, **caractérisé en ce que** le véhicule est équipé sensiblement à l'arrière et/ou à l'avant de prises de courant mâle et/ou femelle (33, 34) reliées entre elles, afin de permettre au véhicule qui est garé à proximité dans le garage de pouvoir s'alimenter en électricité en se branchant sur le véhicule précédent qui sert ainsi de rallonge électrique.

2. Véhicule suivant la revendication 1 **caractérisé en ce que**, le gaz étant de l'air, l'air d'alimentation du compresseur haute pression est prélevé entre le système de filtration du moteur et le moteur par un système de dérivation permettant ainsi d'éviter un système de filtrage indépendant sur le compresseur.

3. Véhicule suivant la revendication 2 **caractérisé en ce que** le compresseur embarqué est relié à la transmission du véhicule (30) à travers un embrayage (31) et est actionné durant les décélérations et les freinages du véhicule permettant ainsi de remplir les réserves d'air comprimé (23) en évitant de perdre l'énergie dissipée lors des ralentissements et freinages.

## Claims

1. Vehicle, and more particularly urban buses or other service vehicles, comprising a reduced-pollution and/or pollution-reducing engine, in which an air-fuel mixture is drawn into and compressed in a constant-volume intake chamber (2) into which there is introduced, somewhat after compressed air - without fuel - from the inlet and compression chamber (1) is let into it, a small amount of additional compressed nonpolluting gas originating from an external tank (23) in which this additional compressed gas is stored under high pressure and at more or less ambient temperature, comprising an on-board high-pressure compressor assembly for supplying compressed air allowing the vehicle's compressed gas reserves to be filled, in which the compressor assembly comprises a driving motor of the electric type, the vehicle being fitted with connection means to a supply network external to the vehicle, allowing the motor to be powered by electric energy during prolonged stoppages of the vehicle, **characterised in that** the vehicle is fitted more or less at the rear and/or at the front of the vehicle with a male and/or female current outlet connector (33, 34) which are connected together so as to allow the vehicle which is parked near to it in the garage to be able to provide itself with electricity by being plugged into the vehicle in front which thus acts as an extension lead.

2. Vehicle according to claim 1, **characterised in that** as the gas is air, the air supplied to the high-pressure compressor is tapped off between an engine filtration system and the engine by a tapping system that thus makes it possible to avoid having an independent filtration system on the compressor.

3. Vehicle according to claim 2, **characterised in that** the on-board compressor is connected to the vehicle transmission means (30) through a clutch (31) and is actuated during deceleration and braking of the vehicle, thus allowing the compressed air reserves (23) to be filled and avoiding the energy dissipated during deceleration and braking being lost.

## Patentansprüche

1. Fahrzeug, insbesondere vom Typ städtischer Autobus, mit einem gereinigten und/oder reinigenden Motor, bei dem eine Luft-ßrennstoff-Mischung angesaugt und in einer Verbrennungs oder unabhängigen Expansionskammer (2) komprimiert wird, in die man, imwesentlichen nach dem Einlaß von komprimierter Luft in die letztere ohne Brennstoff - die aus einer Belüftungs und Kompressionskammer (1) stammt, eine kleine Menge von nicht verschmutzendem, komprimiertem, zusätzlichem Gas einführt, das aus einem externen Reservoir (23) stammt, in dem das zusätzliche, komprimiert Gas unter hohem Druck gelagert wird und im wesentlichen bei Umgebungstemperatur, von der Art, die eine Satelliteninstallation des Kompressors zur Versorgung mit komprimierter Luft bei hohem Druck umfaßt, die es ermöglicht, die Vorräte an komprimierten Gas des Fahrzeugs aufzufüllen, von dem Typ, bei der die Kompressorinstallation einen elektrischen Antriebsmotor umfaßt, wobei das Fahrzeug mit Einrichtungen für den Anschluß an ein außerhalb des Fahrzeuges liegendes elektrisches Versorgungsnetz ausgestattet ist, die es ermöglichen, den Motor mit elektrischer Energie zu versorgen, während eines verlängerten Haltes des Fahrzeuges, **dadurch gekennzeichnet, daß** das Fahrzeug im wesentlichen vorne und/oder hinten mit männlichen und/oder weiblichen (33, 34) Stromanschlüssen versehen ist, die untereinander verbunden sind, um es einem Fahrzeug, das in der Garage in unmittelbarer Nähe abgestellt ist, zu ermöglichen, sich mit Elektrizität zu versorgen, durch Anschluß an dem vorhergehenden Fahrzeug, das dabei als elektrische Verlängerung dient.

2. Fahrzeug nach Anspruch 1, **dadurch gekennzeichnet, daß**, soweit es sich bei dem Gas um Luft handelt, die Versorgungsluft des Hochdruckkompressors zwischen dem Filtrationssystem des Motors und dem Motor durch ein Abzweigsystem entnommen wind, wodurch es ermöglicht wird, ein unabhängiges Filtersystem an dem Kompressor zu vermeiden.

3. Fahrzeug nach Anspruch 2, **dadurch gekennzeichnet, daß** der Satellitenkompressor, mit dem Getriebe des Fahrzeuges (30) über eine Kupplung (31) verbunden ist und während der Verzögerung und Bremsvorgänge des Fahrzeuges betätigt wird, wodurch es ermöglicht wird, die Vorräte an komprimierter Luft (23) zu befüllen, in dem man einen Verlust von Dossipationsenergie während der Verzögerungen und Bremsvorgänge vermeidet.
